# EUROPEAN PATENT SPECIFICATION

(11) **EP 2 180 354 B1**
(45) Date of publication and mention of the grant of the patent: **02.08.2017**
(21) Application number: 08827792.6
(22) Date of filing: 20.08.2008
(51) Int. Cl.: G02B 1/111, B32B 7/02, B32B 27/00, G02B 1/10, G02F 1/1335, G09F 9/00

(54) **ANTIREFLECTION FILM**
ANTIREFLEXSCHICHT
FILM ANTI-REFLET

(30) Priority: 21.08.2007 JP 2007214971
(43) Date of publication of application: 28.04.2010
(73) Proprietor: Dexerials Corporation, Tokyo 141-0032 (JP)
(72) Inventor: KOBORI, Shigeto, Kanuma-shi Tochigi 322-8501 (JP); KAKEFUDA, Ikuo, Kanuma-shi Tochigi 322-8501 (JP)
(74) Representative: Müller-Boré & Partner Patentanwälte PartG mbB
(86) International application number: PCT/JP2008/064815
(87) International publication number: WO 2009/025292

(56) References cited:
- JP-A- 2006 219 632
- JP-A- 2007 011 323
- US-A1- 2006 188 664
- US-A1- 2006 269 733

## Description

### TECHNICAL FIELD

The present invention relates to an antireflection film that prevents or reduces reflection.

### BACKGROUND ART

Generally, in an image display device such as a CRT, PDP, or LCD, an antireflection film is disposed on the outermost surface of the display to reduce its surface reflectivity according to the principle of optical interference so that outside image reflection and a reduction in contrast due to ambient light reflection can be prevented.

In recent years, the occasions to use various displays outdoors tend to increase more and more. Therefore, there is a demand for further improvement in display quality so that the displayed image can be clearly seen.

To meet this demand, Patent Documents 1 and 2 disclose that a coating layer containing transparent particles is formed on the surface of a transparent film substrate so that ambient light is irregularly reflected from the formed irregular surface.

In other known antireflection films, a hard coat layer formed of a metal oxide or the like and a low-refractive index layer are deposited on the surface of a transparent film, or a single low-refractive index layer made of an inorganic compound, an organic fluorine compound, or the like is formed on the surface of a transparent film substrate. Such antireflection films exhibit an antireflection effect over a wide visible light range and are used by, for example, pasting them on the surfaces of displays (see Patent Document 3).

An antireflection layer can be formed by stacking the hard coat layer formed of a metallic compound or the like and the low-refractive index layer or can be formed of the single low-refractive index layer made of an inorganic compound, an organic fluorine compound, or the like. The layer(s) can be generally formed by a dry coating method such as a PVD (Physical Vapor Deposition) method (for example, a vacuum vapor deposition method, a reactive vapor deposition method, an ion beam assisted method, a sputtering method, or an ion plating method) or a CVD (Chemical Vapor Deposition) method. Such a dry coating method has disadvantages in that the size of a substrate is limited and that the method is not suitable for continuous production, so that manufacturing cost becomes high.

Therefore, attention is given to production of an antireflection film using a wet coating method that is adapted to a large-area substrate and continuous production and thereby capable of reducing cost. Examples of the wet coating method include dip coating, spin coating, flow coating, spray coating, roll coating, gravure roll coating, air doctor coating, blade coating, wire doctor coating, knife coating, reverse coating, transfer roll coating, micro gravure coating, kiss coating, cast coating, slot orifice coating, calender coating, and die coating methods.

The methods for obtaining the low-refractive index layer by wet coating are broadly classified into:
(1) methods in which a low-refractive index material containing fluorine is used; and
(2) methods in which voids are formed in the layer so that the air in the voids reduces the refractive index.

Specific examples of the material that forms the low-refractive index layer used in the above methods include fluorine-containing organic materials and low-refractive index fine particles. It has been contemplated to use these materials singly or in combination. Document US2006/188664 discloses a coating composition for the formation of low refractive index layers and anti-reflective film wherein the low refractive index layer is made of a polysiloxane and hollow fine silica particles. Further relevant state of the art can be found in document US2006/269733 and in the following:
[Patent Document 1] Japanese Patent Application Laid-Open No. H07-290652
[Patent Document 2] Japanese Patent Application Laid-Open No. H07-294740
[Patent Document 3] Japanese Patent Application Laid-Open No. H06-230201

### DISCLOSURE OF THE INVENTION

### PROBLEMS TO BE SOLVED BY THE INVENTION

Antireflection layers formed by the methods (1) and (2) have poor alkali resistance and can be problematically peeled off when wiped with alkaline detergent or the like.

In an antireflection film, the low-refractive index layer used as the outermost layer must, of course, not only have a low refractive index but also must resist scratches and other damage. In addition, such an antireflection film must resist adhesion of stains such as fingerprints, sebum, sweat, and cosmetics of a user and must allow accidental stains to be easily wiped off.

However, the low-refractive index layers used in the conventional technologies do not satisfy all the characteristics including refractive index, scratch resistance, and stain resistance. A layer that does not satisfy all of these characteristics cannot be practically used as the low-refractive index layer of an antireflection film.

The present invention has been made to solve the above problems in the conventional technologies. It is an object of the invention to provide an antireflection film according to claim 1.

### MEANS FOR SOLVING THE PROBLEMS

To solve the above problems, the present invention provides an antireflection film according to claim 1.

### ADVANTAGES OF THE INVENTION

According to the present invention, an antireflection film is obtained which includes a low-refractive index layer that has a very low refractive index, has a surface resistant to scratches and other damage and resistant to chemicals, and is prevented from being peeled off. In a more preferred aspect of the invention, an antireflection film is obtained which resists adhesion of stains such as fingerprints, sebum, sweat, and cosmetics and allows accidentally adhered stains to be easily wiped off.

### BRIEF DESCRIPTION OF THE DRAWINGS

Fig. 1 is a cross-sectional view of an antireflection film of the present invention.
Fig. 2 is a schematic cross-sectional view illustrating the antireflection film applied to a display device.
Fig. 3 is a diagram illustrating a process of producing a modified silicone compound.

### DESCRIPTION OF THE REFERENCE NUMERALS

- 10 ...: antireflection film
- 11 ...: transparent substrate
- 12 ...: high-refractive index layer
- 15 ...: low-refractive index layer

### BEST MODE FOR CARRYING OUT THE INVENTION

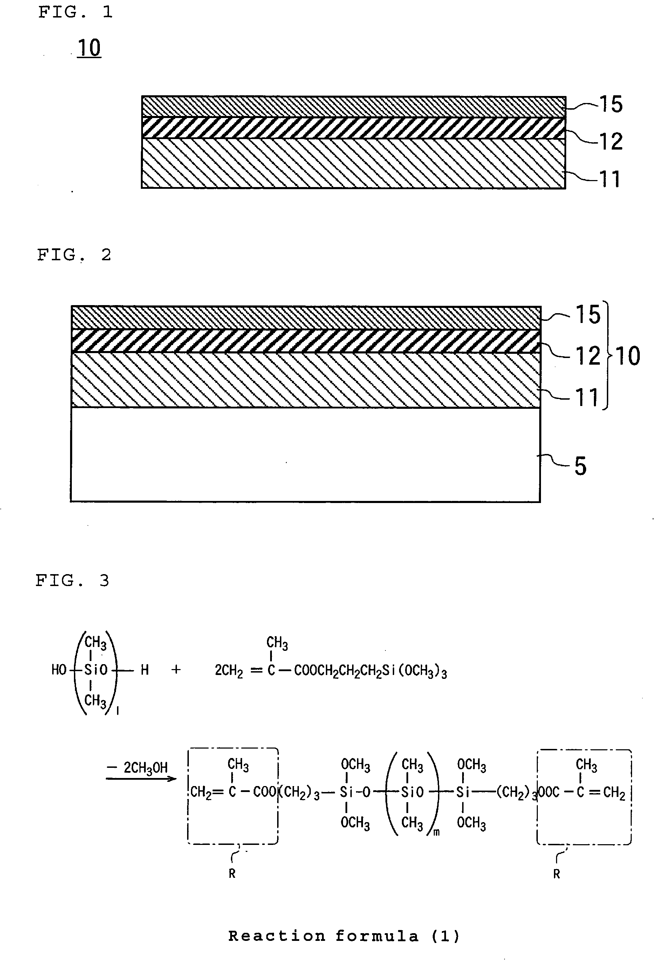

Reference numeral 10 in Fig. 1 represents an antireflection film of the present invention. The antireflection film 10 is a stack including a transparent substrate 11, a high-refractive index layer (hard coat layer) 12 formed on the surface of the transparent substrate 11, and a low-refractive index layer 15 formed on the surface of the high-refractive index layer 12.

When ambient light enters the antireflection film 10, the light reflected from the surface of the high-refractive index layer 12 and the light reflected from the surface of the low-refractive index layer 15 are different in phase from the light reflected from the surface of the transparent substrate 11. This results in cancellation of the reflected light waves, and the intensities of the reflected light waves are attenuated.

Fig. 2 shows the antireflection film 10 of the present invention, with the film 10 being pasted on the image display surface of a display device 5 through a transparent adhesive (not shown) or a similar material. As described above, since the intensity of the reflected ambient light is attenuated, the image displayed on the display device 5 can be clearly observed.

Preferably, the high-refractive index layer 12 formed on the transparent substrate 11 is formed of an ionizing radiation curable resin because of its hardness and durability. No particular limitation is imposed on the ionizing radiation curable resin so long as it can be used for the high-refractive index layer. The ionizing radiation curable resin used may be appropriately selected from any known ionizing radiation curable resins.

More specifically, the ionizing radiation curable resin for the high-refractive index layer contains a photopolymerizable oligomer, a photopolymerizable monomer, a photopolymerization initiator, and the like.

Examples of the photopolymerizable oligomer include polyester acrylate-based, epoxy acrylate-based, urethane acrylate-based, polyol acrylate-based oligomers and the like.

Examples of the photopolymerizable monomer include trimethylolpropane tri(meth)acrylate, hexanediol (meth)acrylate, tripropylene glycol di(meth)acrylate, diethylene glycol di(meth)acrylate, pentaerythritol tri(meth)acrylate, dipentaerythritol hexa(meth)acrylate, 1,6-hexanediol di(meth)acrylate, neopentyl glycol di(meth)acrylate, isocyanuric acid EO modified di(meth)acrylate, dimethylol tricyclodecane di(meth)acrylate and the like.

In the present invention, (meth)acrylate refers to both acrylate and methacrylate.

When the high-refractive index layer 12 is formed using the ionizing radiation curable resin containing the photopolymerizable monomer and/or photopolymerizable oligomer, the refractive index of the high-refractive index layer 12 can be made higher than the refractive index of the transparent substrate 11 described later. In particular, in the present invention, a (meth)acrylate-based photopolymerizable oligomer or the like is preferably used, and pentaerythritol tetra(meth)acrylate or the like is preferably used as the photopolymerizable monomer because the number of functional groups is high and the hardness and durability can be improved. One or a combination of two or more of the photopolymerizable prepolymers (photopolymerizable monomers and photopolymerizable oligomers) may be used.

The ionizing radiation curable resin may contain at least one photopolymerization initiator selected from the group consisting of, for example, acetophenones, benzophenones, α-amyloxime esters, tetramethylthiuram monosulfide, and thioxanthone.

In addition, a mixture of two or more selected from the group consisting of n-butylamine, triethylamine, and poly-n-butylphosphine may be used as a photosensitizer.

When the high-refractive index layer 12 is formed from a thermosetting resin, the thermosetting resin may have any composition including a suitable polymerization initiator appropriately changed. A peroxide is generally used as the polymerization initiator.

The low-refractive index layer 15 formed on the high-refractive index layer 12 is a layer formed by curing a polymerizable composition containing a modified silicone compound as a first resin component, a second resin component different from the modified silicone compound, and hollow fine particles. Preferably, the polymerizable composition is an ionizing radiation curable resin composition.

Each hollow fine particle has a void therein. For example, with hollow silica particles, the internal voids are surrounded by silicon oxide. Therefore, the hollow fine particles have a lower refractive index than ordinary non-hollow particles because of the air in the voids. For example, the refractive index of ordinary silica particles is 1.46, but the refractive index of hollow silica particles is 1.45 or less.

The specific gravity of normal silica particles is about 2, and the specific gravity of porous silica particle is about 1.7. The hollow silica particles are lighter than the normal silica particles and porous silica particles and have a specific gravity of 1.5 or more and 1.6 or less.

The porous silica particles are formed of a large number of aggregated silica fine particles, and the interstices (gaps) between the silica fine particles appear on the surfaces. Therefore, when the porous silica particles are added to a matrix material, the matrix material easily enters the interstices. However, even when the hollow silica particles are added to the matrix material, the matrix material does not enter the voids inside the particles, so the refractive index of the hollow silica particles does not increase.

Therefore, when hollow fine particles such as hollow silica particles are added to the ionizing radiation curable resin for the low-refractive index layer 15, the refractive index of the low-refractive index layer 15 can be reduced to be lower than the refractive index obtained when ordinary particles or porous particles such as porous silica particles are added. In such a case, the refractive index of the low-refractive index layer 15 can be made lower than the refractive index of the transparent substrate 11.

Hollow fine particles such as hollow silica particles may not be or may be added to the high-refractive index layer 12. In this case, the amount (percent by weight) of hollow fine particles added is less than the amount thereof added to the low-refractive index layer 15. In this manner, the refractive index of the low-refractive index layer 15 can be made lower than the refractive index of the high-refractive index layer 12.

More specifically, the refractive index of the hollow silica particles is lower than the refractive index of a polymerized product of a (meth)acrylate. Suppose that such a (meth)acrylate is used as the main component of the ionizing radiation curable resin for the high-refractive index layer 12 and as the main component of the polymerizable composition for the low-refractive index layer 15. In this case, by adding the hollow silica particles only to the polymerizable composition for the low-refractive index layer 15, the refractive index of the low-refractive index layer 15 can be made lower than the refractive index of the high-refractive index layer 12.

Examples of the hollow fine particles include inorganic hollow fine particles such as silica and alumina particles and organic hollow fine particles such as styrene and acrylic particles. Preferably, in the present invention, hollow silica particles are used because of their availability.

The average particle diameter of the hollow fine particles is preferably 10 nm or more and 200 nm or less and more preferably 30 nm or more and 60 nm or less.

When the average particle diameter is greater than 200 nm, light is scattered at the surface of the low-refractive index layer 15 due to Rayleigh scattering. This causes a whitish appearance and may reduce the transparency of the low-refractive index layer 15. When the average particle diameter is less than 10 nm, the hollow fine particles can be aggregated.

Preferably, the hollow fine particles used have on their surfaces functional groups that are polymerized by ionizing radiation.

No particular limitation is imposed on the functional groups on the surfaces of the hollow fine particles. A (meth)acryloyl group and a vinyl group that are polymerizable with the modified silicone compound and the second resin component described layer are preferred.

The hollow fine particles having such functional groups provided on their surfaces have good compatibility with the modified silicone compound and the second resin component described later and are uniformly mixed therewith in a coating solution. Therefore, a low-refractive index layer 15 having uniform film properties can be obtained.

When the hollow fine particles having the functional groups provided on their surfaces are used, the modified silicone compound and the second resin component react with the functional groups on the surfaces of the hollow fine particles and are bonded to these surfaces during polymerization of the modified silicone compound and the second resin component by irradiation with ionizing radiation. As a result, the mechanical strength of the low-refractive index layer can be improved.

The modified silicone compound is used as the first resin component of the polymerizable composition for the low-refractive index layer 15 to improve the hardness, durability, and stain resistance of the low-refractive index layer 15. Preferably, the modified silicone compound is an ionizing radiation curable resin.

The modified silicone compound is represented by, for example, the following chemical formula (1).

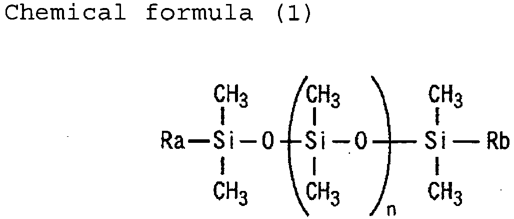

The main skeleton of the compound includes at least two mutually bonded siloxane structures (Si-O). In the chemical formula (1), the main skeleton is polydimethyl silicone in which methyl groups are bonded to Si in each siloxane structure. However, no particular limitation is imposed on the number and type of the substituents bonded to Si in each siloxane structure. The number of substituents bonded to one Si atom may be zero, 1, or 2, and examples of the substituents other than methyl groups include alkyl groups such as ethyl, propyl, and butyl groups.

Functional groups Ra and Rb are bonded to silicon atoms in the siloxane structures directly or through other bonds. When one molecule of the modified silicone compound has two or more functional groups Ra and Rb, the functional groups Ra and Rb may be the same or different.

No particular limitation is imposed on the functional groups Ra and Rb so long as they can react with each other or with other resin components (for example, the second resin component) under irradiation preferably with ionizing radiation and more preferably with light. Examples of the functional groups Ra and Rb include methacryloyl, acryloyl, and mercapto groups.

A description will be given of an exemplary process of producing the modified silicone compound. For example, a silicone having at least one hydroxyl group and an alkoxy compound having the functional group and alkoxy groups are used as raw materials (the upper line in the reaction formula (1) in Fig. 3). In the upper line in reaction formula (1), the silicone is dimethylpolysiloxane having two hydroxyl groups (1 = 10 to 14).

The alkoxy compound has at least one functional group selected from the group consisting of methacryloyl, acryloyl, and mercapto groups. In the upper line in the reaction formula (1), the alkoxy compound is γ-methacryloyloxypropyltrimethoxysilane having three methoxy groups and a methacryloyl group.

If necessary, an additive (for example, hexyl alcohol) is added to the mixture of the silicone and alkoxy compound, and the resultant mixture is heated. Then the hydroxyl group in the silicone reacts with the alkoxy group in the alkoxy compound, and the alkoxy compound is bonded to the silicone.

After completion of the reaction, the remaining additive, unreacted silicone, unreacted alkoxy compound, and by-product (methanol) are removed (by, for example, evaporation under reduced pressure), and the modified silicone compound shown in the lower line in the reaction formula (1) in Fig. 3 is thereby obtained.

Symbol R in Fig. 3 represents a functional group, and the functional group R is the same as the functional group in the alkoxy compound used as the raw material, and in this example, is a methacryloyl group.

Symbol m in Fig. 3 is the number of siloxane structures originating from the silicone used as the raw material. When the molecules of the silicone used as the raw material are polymerized with each other during the process of reacting the silicone with the alkoxy compound, the number m of the siloxane structures is greater than 1 being the number of the siloxane structures in the raw material.

When the functional group equivalent weight of the modified silicone compound used is 1630 g/mol or more, the stain resistance of the antireflection film is improved, as described later.

The functional group equivalent weight means the weight of the main skeleton M (for example, polydimethylsiloxane) per one bonded functional group. However, the weight per one mole of the functional group (g/mol) is used as the unit.

The functional group equivalent weight of the modified silicone compound is computed, for example, from the spectral intensities of ¹H-NMR (proton NMR) obtained using a nuclear magnetic resonance (NMR) apparatus.

With ¹H-NMR, the ratio of the spectral intensity of H bonded to Si in the siloxane structures through C (for example, H in Si-(CH₃)₂) to the spectral intensity of H in C-CH₃, H in SH, or H in C=CH₂ in the functional groups is determined.

A description will be given of an example in which the ratio of the spectral intensity of H in Si-(CH₃)₂ in the siloxane structures to the spectral intensity of H in C=CH₂ in the functional groups is determined. The ratio of the number of Si-(CH₃)₂ in the siloxane structures to the number of C=CH₂ in the functional groups in a measurement sample can be determined from the ratio of the spectral intensities.

The chemical formula of the siloxane structure and the chemical formula of the functional group are previously known. Therefore, the ratio (A/B) of the number A of the siloxane structures each having the Si-(CH₃)₂ bond to the number B of the functional groups in the measurement sample can be determined from the ratio of the number of Si-(CH₃)₂ in the siloxane structures to the number of C=CH₂ in the functional groups.

The molecular weight of one siloxane structure having the Si-(CH₃)₂ bond (dimethylsiloxane in this case) is known. Therefore, the value obtained by multiplying the molecular weight of one siloxane structure by the ratio (A/B) of the number A of the siloxane structures to the number of the functional groups is the mass of the siloxane structures each having the Si-(CH₃)₂ bond per one functional group, i.e., the mass of the main skeleton per one functional group. The functional group equivalent weight (g/mol) can be obtained by multiplying the above-obtained value by the Avogadro's number.

For example, the focus is given to the polydimethylsiloxane (Si-CH₃: a chemical shift around 0 ppm) and the methacrylic group (C=CH₂: a chemical shift around 4 to 7 ppm), and the existence ratio is computed from the ratio of the obtained spectral intensities and converted to the unit used (g/mol).

Examples of the modified silicone compound include products of Shin-Etsu Chemical Co., Ltd., such as "X-22-164 (product name)" (functional group equivalent weight: 190 g/mol), "X-22-164AS" (functional group equivalent weight: 450 g/mol), "X-22-164A" (functional group equivalent weight: 860 g/mol), "X-22-164B" (functional group equivalent weight: 1630 g/mol), "X-22-164C" (functional group equivalent weight: 2370 g/mol), and "X-22-164E" (functional group equivalent weight: 3900 g/mol).

Preferably, the amount of the modified silicone compound in the polymerizable composition is 10 percent by weight or less in view of the coating uniformity.

The second resin component in the polymerizable composition for the low-refractive index layer 15 is different from the modified silicone compound described above and is preferably an ionizing radiation curable resin component. Preferably, 90 percent by weight or more of the second resin component is a polyfunctional monomer.

Preferably, the polyfunctional monomer has at least two (meth)acryloyl groups. Examples of the polyfunctional monomer include: esters of polyalcohols and (meth)acrylic acids. Specific examples thereof include polyethylene glycol diacrylate, ethylene glycol di(meth)acrylate, 1,4-dicyclohexane diacrylate, pentaerythritol tetra(meth)acrylate, pentaerythritol tri(meth)acrylate, trimethylolpropane tri(meth)acrylate, trimethylolethane tri(meth)acrylate, dipentaerythritol tetra(meth)acrylate, dipentaerythritol penta(meth)acrylate, dipentaerythritol hexa(meth)acrylate, 1,2,3-cyclohexane tetramethacrylate; polyurethane polyacrylate; polyester polyacrylate and the like.

One or a mixture of two or more of these polyfunctional monomers may be used by mixing with the modified silicone compound used as the first resin component for the low-refractive index layer 15.

In particular, one or both of a di(meth)acrylate (bifunctional monomer) and a tetra(meth)acrylate (tetrafunctional monomer) are preferably used.

An oligomer such as a polyester acrylate oligomer may be used in the second resin component in an amount of less than 10 percent by weight.

In addition to the hollow silica particles, the modified silicone compound, and the second resin component described above, a photopolymerization initiator and a photosensitizer similar to those used in the high-refractive index layer 12 may be added to the polymerizable composition for the low-refractive index layer 15.

When the low-refractive index layer 15 is formed from a thermosetting resin, the thermosetting resin may have any composition including a suitable polymerization. initiator appropriately changed. A peroxide is generally used as the polymerization initiator.

Examples of the transparent substrate 11 used in the present invention include films formed of transparent polymers such as polyester polymers (such as polyethylene terephthalate and polyethylene naphthalate), cellulose polymers (such as diacetyl cellulose and triacetyl cellulose), polycarbonate polymers, and acrylic polymers (such as polymethyl methacrylate).

No particular limitation is imposed on the thickness of the transparent substrate 11. Generally, a film having a thickness of 30 µm or more and 200 µm or less is used.

No particular limitation is imposed on the method of applying the coating solutions for the high-refractive index layer and the low-refractive index layer used in the present invention. For example, a wet coating method that can reduce cost is used. Examples of the wet coating method include dip coating, spin coating, flow coating, spray coating, roll coating, gravure roll coating, air doctor coating, blade coating, wire doctor coating, knife coating, reverse coating, transfer roll coating, micro gravure coating, kiss coating, cast coating, slot orifice coating, calender coating, and die coating methods.

After the coating solution for the high-refractive index layer and the coating solution for the low-refractive index layer are sequentially applied to the transparent substrate 11 to form a stack of coating layers, the coating layers are cured by irradiation with ionizing radiation. In this manner, an antireflection film having the high-refractive index layer 12 and the low-refractive index layer 15 deposited on the transparent substrate 11 is obtained. Alternatively, the coating solution for the high-refractive index layer is applied to the transparent substrate 11, and the coating layer is cured by irradiation with ionizing radiation. Then the coating solution for the low-refractive index layer is applied, and the coating layer is cured by irradiation with ionizing radiation. Also in this manner, an antireflection film having the high-refractive index layer 12 and the low-refractive index layer 15 deposited sequentially on the transparent substrate 11 is obtained.

Examples of the ionizing radiation include UV radiation and electron radiation, but the ionizing radiation is not particularly limited thereto. No limitation is imposed on the atmosphere during irradiation with ionizing radiation. The irradiation may be performed in any atmosphere such as air or an inert gas (for example, nitrogen or argon) atmosphere. In particular, a nitrogen atmosphere is preferred since the properties of the high-refractive index layer 12 and the low-refractive index layer 15 are improved.

More specifically, the transparent substrate having the coating layer for the high-refractive index layer or the low-refractive index layer formed thereon is transferred into a curing chamber directly or after the coating layer is dried to remove excess solvent.

The internal space of the curing chamber is shielded from the atmosphere. While nitrogen gas is supplied to the curing chamber, the curing chamber is evacuated to form a nitrogen atmosphere with an oxygen concentration of 1,000 ppm or less. While this nitrogen atmosphere is maintained, the coating layer is cured by irradiation with ionizing radiation such as UV radiation.

No particular limitation is imposed on the thickness of the low-refractive index layer 15 formed on the high-refractive index layer 12. Preferably, the thickness is 50 nm to 200 nm. No particular limitation is imposed on the surface roughness of the low-refractive index layer 15. Preferably, the average surface roughness is 1.0 nm to 5 nm.

### Examples

### <Example 1>

Dipentaerythritol hexaacrylate, isocyanuric acid EO modified diacrylate, dimethylol tricyclodecane diacrylate, antimony pentoxide, and an initiator (1-hydroxycyclohexyl-phenyl-ketone) were dissolved in isopropyl alcohol used as a solvent such that the concentration of solids was 40 percent by weight, whereby a coating solution for the high-refractive index layer was prepared.

It should be noted that the solids are materials in the coating solution other than the solvent. In this case, the solids include antimony pentoxide, the initiator and the photopolymerizable prepolymers such as dipentaerythritol hexaacrylate.

The prepared coating solution for the high-refractive index layer was applied to the surface of a triacetyl cellulose film (thickness: 80 µm) used as the transparent substrate 11 to a dry thickness of 2 µm by a gravure method. The applied coating solution was dried in an oven at 80°C for 1.5 minutes and cured by irradiation for 3 seconds using a 160 W high-pressure mercury lamp from a distance of 18 cm, whereby the high-refractive index layer 12 was formed.

The following coating solution was prepared to form the low-refractive index layer 15.

A matrix material (the second resin component) was produced by mixing 8 percent by weight of a polyester acrylate oligomer, 35 percent by weight of pentaerythritol tetraacrylate, and 57 percent by weight of polyethylene glycol diacrylate.

A low-refractive index coating agent (polymerizable composition) was produced which contained 50.5 percent by weight of the matrix material, 40 percent by weight of hollow silica particles having an average diameter of 60 nm, 8 percent by weight of an α-hydroxy ketone-based initiator, and 1.5 percent by weight of a modified silicone compound (functional group equivalent weight: 3900 g/mol).

The low-refractive index coating agent was dissolved and dispersed in n-butanol used as a solvent to produce the coating solution for the low-refractive index layer with the concentration of solids (the low-refractive index coating agent) being 3.0 percent by weight.

The coating solution for the low-refractive index layer was applied to the surface of the high-refractive index layer 12 to a dry thickness of 100 nm by the gravure method to form a coating layer. The coating layer was dried in an oven at 80°C for 1.5 minutes and cured in a nitrogen atmosphere (oxygen concentration: 1000 ppm) by irradiation with light from a 160 W high-pressure mercury lamp from a distance of 18 cm for 3 seconds. In this manner, the low-refractive index layer 15 was formed, and an antireflection film 10 of Example 1 was obtained.

### <Example 2>

An antireflection film of Example 2 was produced under the same conditions as in Example 1 except that the amount of the hollow silica particles in the low-refractive index coating agent was changed from 40 percent by weight to 50 percent by weight and that the amount of the matrix material was changed from 50.5 percent by weight to 40.5 percent by weight.

### <Example 3>

An antireflection film of Example 3 was produced under the same conditions as in Example 1 except that the amount of the hollow silica particles in the low-refractive index coating agent was changed from 40 percent by weight to 60 percent by weight and that the amount of the matrix material was changed from 50.5 percent by weight to 30.5 percent by weight.

### <Example 4>

An antireflection film of Example 4 was produced under the same conditions as in Example 1 except that the amount of the hollow silica particles in the low-refractive index coating agent was changed from 40 percent by weight to 70 percent by weight and that the amount of the matrix material was changed from 50.5 percent by weight to 20.5 percent by weight.

### <Example 5> (not being part of the present invention)

An antireflection film of Example 5 was produced under the same conditions as in Example 2 except that a modified silicone compound having a functional group equivalent weight of 1630 g/mol was used instead of the modified silicone compound having a functional group equivalent weight of 3900 g/mol.

### <Example 6>

An antireflection film of Example 6 was produced under the same conditions as in Example 1 except that the amount of the hollow silica particles in the low-refractive index coating agent was changed from 40 percent by weight to 30 percent by weight and that the amount of the matrix material was changed from 50.5 percent by weight to 60.5 percent by weight.

### <Example 7> (not being part of the present invention

An antireflection film of Example 7 was produced under the same conditions as in Example 2 except that a modified silicone compound having a functional group equivalent weight of 190 g/mol was used instead of the modified silicone compound having a functional group equivalent weight of 3900 g/mol.

### <Example 8> (not being part of the present invention

An antireflection film of Example 8 was produced under the same conditions as in Example 2 except that a modified silicone compound having a functional group equivalent weight of 450 g/mol was used instead of the modified silicone compound having a functional group equivalent weight of 3900 g/mol.

### <Example 9> (not being part of the present invention)

An antireflection film of Example 9 was produced under the same conditions as in Example 2 except that a modified silicone compound having a functional group equivalent weight of 860 g/mol was used instead of the modified silicone compound having a functional group equivalent weight of 3900 g/mol.

### <Comparative Example 1>

An antireflection film of Comparative Example 1 was produced under the same conditions as in Example 2 except that the modified silicone compound was not added to the low-refractive index coating agent.

### <Comparative Example 2>

An antireflection film of Comparative Example 2 was produced under the same conditions as in Example 1 except that the amount of the hollow silica particles in the low-refractive index coating agent was changed from 40 percent by weight to 80 percent by weight, that the amount of the modified silicone compound was changed from 1.5 percent by weight to zero, and that the amount of the matrix material was changed from 50.5 percent by weight to 12 percent by weight.

Each of the antireflection films of Examples 1 to 9 and Comparative Examples 1 and 2 was subjected to the following tests for evaluating "optical properties," "stain resistance," "chemical resistance," "scratch resistance," "surface roughness," and "pencil hardness."

### <Optical properties (reflectivity measurement)>

A black tape was applied to the non-coated rear surface of the transparent substrate 11 (the surface opposite to the surface having the high-refractive index layer 12 and the low-refractive index layer 15 formed thereon). The minimum reflectivity (%) of the coated surface of the reflection film 10 (the surface on the side on which the low-refractive index layer 15 was formed) was measured at wavelengths of 370 nm to 790 nm and a light incident angle of 12° using a spectrophotometer (U-4100, product of Hitachi High-Technologies Corporation).

### <Stain resistance (ease of wiping oil marker ink off)>

Oil marker ink adhering to the coated surface was wiped off with cellulose nonwoven fabric (BEMCOT M-3, product of Asahi Kasei Corporation), and the ease of wiping off was visually evaluated. The evaluation criteria are shown below.
AA: The oil marker ink is repelled, does not easily adhere, and can be completely wiped off.
   A: The oil marker ink can be completely wiped off.
   B: Some of the oil marker ink remains as wiping marks.
   C: The oil marker ink cannot be wiped off.

### <Chemical resistance (resistance to 1% aqueous NaOH solution)>

A black tape was applied to the non-coated rear surface, and a 1% aqueous NaOH solution was caused to adhere to the coated surface and left to stand at room temperature for 30 minutes. Subsequently, the adhering 1% aqueous NaOH solution was wiped off, and changes in appearance were visually observed under a white fluorescent lamp. The evaluation criteria are shown below.
AA: No changes in appearance are found.
   A: Few changes in appearance are found.
   B: Some portions are whitened or eroded.
   C: The entire portion is whitened or eroded.

### <Scratch resistance (hardness) test>

The surface of the low-refractive index layer 15 was rubbed forward and backward 20 times with steel wool (#0000) under a load of 250 g/cm², and the presence or absence of scratches was visually observed. The evaluation criteria are shown below.
AA: No scratches are found on the surface.
   A: Some scratches are found on the surface.
   B: Many scratches are found on the surface.
   C: Scratches are found over the entire surface.

### <Surface roughness>

The average surface roughness (Ra) was measured using an atomic force microscope (AFM) (product name: "SPI 3800N," product of Seiko Instruments Inc.).

### <Pencil hardness test>

The test was performed using a pencil hardness tester (product of TESTER SANGYO Co., Ltd.) under a load of 750 g to determine whether or not flaws were formed. A pencil having a hardness of 2H was used. The evaluation criteria are shown below.

OK: The test is repeated 5 times for each sample, and flaws, dents, and the like are not found in at least 3 in 5 repetitions.

NG: The test is repeated 5 times for each sample, and flaws, dents, and the like are found in at least 3 in 5 repetitions.

The samples evaluated as OK in the pencil hardness test have a pencil hardness of 2H or higher.

The results of the above evaluation tests are listed in Table 1 together with the functional group equivalent weights of the modified silicone compounds and the amounts of the hollow silica particles.

**[Table 1]**

| Results of evaluation tests | | | | | | | | |
|---|---|---|---|---|---|---|---|---|
| | Organic group equivalent weight (g/mol) | Hollow silica particles (percent by weight) | Optical Minimum reflectivity (%) | Stain resistance Oil marker ink | Chemical resistance | Scratch resistance test | Surface roughness Ra (nm) | Pencil hardness 2H |
| Example 1 | 3900 | 40 | 1.5 | AA | AA | AA | 2.2 | OK |
| Example 2 | 3900 | 50 | 1.29 | AA | AA | AA | 3.5 | OK |
| Example 3 | 3900 | 60 | 0.95 | AA | AA | AA | 4.5 | OK |
| Example 4 | 3900 | 70 | 0.79 | A | A | A | 6.8 | OK |
| Example 5 | 1630 | 50 | 1.24 | B | A | A | 4.1 | OK |
| Example 6 | 3900 | 30 | 1.79 | AA | A | A | 2.6 | OK |
| Example 7 | 190 | 50 | 1.29 | C | A | A | 3.8 | OK |
| Example 8 | 450 | 50 | 1.26 | C | A | A | 4.8 | OK |
| Example 9 | 860 | 50 | 1.31 | C | A | A | 4.5 | OK |
| Comparative Example 1 | - | 50 | 1.25 | C | A | A | 3.9 | NG |
| Comparative Example 2 | - | 80 | 0.64 | C | C | C | 7.5 | NG |

| | | | | | | | | |
|---|---|---|---|---|---|---|---|---|
| * In Table 1, "-" represents that the amount of a modified silicone acrylate compound is 0. | | | | | | | | |

As can be seen from Table 1, in Comparative Examples 1 and 2 in which no modified silicone compound was added to the low-refractive index layer, not only the stain resistance was poor, but also the pencil hardness was NG. Therefore, the minimum characteristics practically required as the antireflection film 10 were not satisfied.

In Examples 1 to 9 in which the modified silicone compound was added to the low-refractive index layer, the pencil hardness was 2H or higher. In addition, the results of the scratch resistance test were satisfactory, and the chemical resistance was good. Therefore, the characteristics practically required as the antireflection film were satisfied.

In Examples 1 to 5, the functional group equivalent weight was 1630 g/mol or more, and the amount of the hollow silica particles was 40 percent by weight or more and 70 percent by weight or less. Among the results of the evaluation tests for Examples 1 to 9, the results for Examples 1 to 5 were particularly favorable.

In Example 6, the characteristics such as the stain resistance and pencil hardness were good. However, the reflectivity was high (1.79). Therefore, it was found that when the amount of the hollow silica particles is greater than 30 percent by weight and more preferably 40 percent by weight or more, the reflectivity (refractive index) can be more reduced.

In Examples 7 to 9, the evaluation results for the optical properties, chemical resistance, and the like were good, but the stain resistance was poor. Therefore, it was found that to obtain high stain resistance in addition to good optical properties and high chemical resistance, it is required to add a modified silicone compound having a functional group equivalent weight of 3900 g/mol or more to the low-refractive index layer.

### INDUSTRIAL APPLICABILITY

The present invention is useful as an antireflection film disposed on the front surface of the display of an image display device such as a CRT, PDP, or LCD.

## Claims

1. An antireflection film (10) comprising:
a transparent substrate (11);
a high-refractive index layer (12) having a refractive index higher than a refractive index of the transparent substrate (11); and
a low-refractive index layer (15) having a refractive index lower than the refractive index of the high-refractive index layer (12), which are sequentially stacked in this order,
the low-refractive index layer (15) being a cured product of a polymerizable composition including hollow fine silica particles, a modified silicone compound, and a second resin component different from the modified silicone compound,
wherein the modified silicone compound has a main skeleton including at least two siloxane structures as repeating units and a functional group bonded to the main skeleton, the functional group including an acryloyl group or a methacryloyl group,
wherein the modified silicone compound has a functional group equivalent weight value of 3900 g/mol or more, the functional group equivalent weigth value being obtained by dividing a mass of the main skeleton by a number of moles of the functional groups bonded to the main skeleton,
wherein the polymerizable composition includes the modified silicone compound in an amount of 10 percent by weight or less,
wherein the polymerizable composition includes the hollow fine silica particles in an amount of 40 percent by weight or more and 70 percent by weight or less, and
wherein the second resin component includes a polyfunctional monomer in an amount of 90 percent by weight or more, the polyfunctional monomer being selected from the group consisting of esters of polyalcohols and (meth)acrylic acids, in particular polyurethane polyacrylate and polyester polyacrylate.

2. The antireflection film (10) according to claim 1, wherein the low-refractive index layer (15) is a cured product by irradiation with ionizing radiation.

3. The antireflection film (10) according to claim 1 or 2, wherein the hollow fine silica particles have an average particle diameter of 10 nm or more and 200 nm or less.

4. The antireflection film (10) according to any of claims 1 to 3, wherein the hollow fine silica particles have on their surfaces a functional group that is polymerized by ionizing radiation.

5. The antireflection film (10) according to any of claims 1 to 4, wherein the low-refractive index layer (15) has a film thickness of 50 nm or more and 200 nm or less.

6. The antireflection film (10) according to any of claims 1 to 5, wherein the low-refractive index layer (15) has an average surface roughness of 1.0 nm or more and 5 nm or less.

7. The antireflection film (10) according to any of claims 1 to 6, wherein the low-refractive index layer (15) is a cured product obtained by curing an ionizing radiation curable resin composition in a nitrogen atmosphere.

8. The antireflection film (10) according to any of claims 1 to 7, wherein the high-refractive index layer (12) has a pencil hardness of 2H or more.

## Patentansprüche

1. Antireflexfolie (10), umfassend:
ein transparentes Substrat (11);
eine Schicht mit hohem Brechungsindex (12) mit einem Brechungsindex, der höher als ein Brechungsindex des transparenten Substrats (11) ist; und
eine Schicht mit niedrigem Brechungsindex (15) mit einem Brechungsindex, der niedriger als der Brechungsindex der Schicht mit hohem Brechungsindex (12) ist, welche sequentiell in dieser Reihenfolge aufeinandergestapelt sind,
wobei die Schicht mit niedrigem Brechungsindex (15) ein gehärtetes Produkt einer polymerisierbaren Zusammensetzung, einschließend feine Siliciumdioxid-Hohlteilchen, eine modifizierte Silikonverbindung und eine von der modifizierten Silkonverbindung verschiedene zweite Harzkomponente, ist,
wobei die modifizierte Silikonverbindung ein Hauptgerüst, einschließend mindestens zwei Siloxanstrukturen als Wiederholungseinheiten und eine an das Hauptgerüst gebundene funktionelle Gruppe, wobei die funktionelle Gruppe eine Acryloylgruppe oder eine Methacrylgruppe einschließt, aufweist,
wobei die modifizierte Silikonverbindung einen zur funktionellen Gruppe äquivalenten Gewichtswert von 3900 g/mol oder mehr aufweist, wobei der zur funktionellen Gruppe äquivalente Gewichtswert durch Dividieren einer Masse des Hauptgerüstes durch eine Molzahl der an das Hauptgerüst gebundenen funktionellen Gruppen erhalten wird,
wobei die polymerisierbare Zusammensetzung die modifizierte Silikonverbindung mit einem Anteil von 10 Gewichtsprozent oder weniger einschließt,
wobei die polymerisierbare Zusammensetzung die feinen Siliciumdioxid-Hohlteilchen mit einem Anteil von 40 Gewichtsprozent oder mehr und 70 Gewichtsprozent oder weniger einschließt und
wobei die zweite Harzkomponente ein polyfunktionelles Monomer mit einem Anteil von 90 Gewichtsprozent oder mehr einschließt, wobei das polyfunktionelle Monomer aus der Gruppe, bestehend aus Estern von Polyalkoholen und (Meth)acrylsäuren, insbesondere Polyurethanpolyacrylat und Polyesterpolyacrylat, ausgewählt ist.

2. Antireflexfolie (10) nach Anspruch 1, wobei die Schicht mit niedrigem Brechungsindex (15) ein durch Bestrahlen mit ionisierender Strahlung gehärtetes Produkt ist.

3. Antireflexfolie (10) nach Anspruch 1 oder 2, wobei die feinen Siliciumdioxid-Hohlteilchen einen mittleren Teilchendurchmesser von 10 nm oder mehr und 200 nm oder weniger aufweisen.

4. Antireflexfolie (10) nach einem der Ansprüche 1 bis 3, wobei die feinen Siliciumdioxid-Hohlteilchen auf ihren Oberflächen eine funktionelle Gruppe, welche durch ionisierende Strahlung polymerisiert wird, aufweisen.

5. Antireflexfolie (10) nach einem der Ansprüche 1 bis 4, wobei die Schicht mit niedrigem Brechungsindex (15) eine Schichtdicke von 50 nm oder mehr und 200 nm oder weniger aufweist.

6. Antireflexfolie (10) nach einem der Ansprüche 1 bis 5, wobei die Schicht mit niedrigem Brechungsindex (15) eine mittlere Oberflächenrauhigkeit von 1,0 nm oder mehr und 5 nm oder weniger aufweist.

7. Antireflexfolie (10) nach einem der. Ansprüche 1 bis 6, wobei die Schicht mit niedrigem Brechungsindex (15) ein gehärtetes Produkt, erhalten durch Härten einer durch ionisierende Strahlung härtbaren Harzzusammensetzung in einer Stickstoffatmosphäre, ist.

8. Antireflexfolie (10) nach einem der Ansprüche 1 bis 7, wobei die Schicht mit hohem Brechungsindex (12) eine Bleistifthärte von 2H oder mehr aufweist.

## Revendications

1. Film antireflet (10) comprenant:
un substrat transparent (11);
une couche à indice de réfraction élevé (12) ayant un indice de réfraction supérieur à l'indice de réfraction du substrat transparent (11) ; et
une couche à indice de réfraction faible (15) ayant un indice de réfraction inférieur à l'indice de réfraction de la couche à indice de réfraction élevé (12), qui sont séquentiellement empilées dans cet ordre,
la couche à indice de réfraction faible (15) étant un produit réticulé d'une composition polymérisable incluant de fines particules de silice creuses, un composé de silicone modifiée, et un second composant de résine différent du composé de silicone modifiée,
où le composé de silicone modifiée a un squelette principal incluant au moins deux structures siloxane en tant qu'unités répétitives et un groupe fonctionnel lié au squelette principal, le groupe fonctionnel incluant un groupe acryloyle ou un groupe méthacryloyle,
où le composé de silicone modifiée a une valeur en masse équivalente de groupe fonctionnel de 3900 g/mol ou plus, la valeur en masse équivalente de groupe fonctionnel étant obtenu en divisant la masse du squelette principal par un nombre de moles de groupes fonctionnels liés au squelette principal,
où la composition polymérisable inclut le composé de silicone modifiée dans une quantité de 10 pourcent en poids ou moins,
où la composition polymérisable inclut les fines particules de silice creuses dans une quantité de 40 pourcent en poids ou plus et 70 pourcent en poids ou moins, et
où le second composant de résine inclut un monomère polyfonctionnel dans une quantité de 90 pourcent en poids ou plus, le monomère polyfonctionnel étant sélectionné parmi le groupe consistant en des esters de polyalcools et d'acide (méth)acrylique, en particulier du polyacrylate de polyuréthane et du polyacrylate de polyester.

2. Film antireflet (10) selon la revendication 1, où la couche à indice de réfraction faible (15) est un produit réticulé obtenu par irradiation avec une radiation ionisante.

3. Film antireflet (10) selon la revendication 1 ou 2, où les fines particules de silice creuses ont un diamètre moyen de particule de 10 nm ou plus et 200 nm ou moins.

4. Film antireflet (10) selon l'une quelconque des revendications 1 à 3, où les fines particules de silice creuses ont sur leurs surfaces un groupe fonctionnel qui est polymérisé par radiation ionisante.

5. Film antireflet (10) selon l'une quelconque des revendications 1 à 4, où la couche à indice de réfraction faible (15) a une épaisseur de film de 50 nm ou plus et 200 nm ou moins.

6. Film antireflet (10) selon l'une quelconque des revendications 1 à 5, où la couche à indice de réfraction faible (15) a une rugosité de surface moyenne de 1,0 nm ou plus et 5 nm ou moins.

7. Film antireflet (10) selon l'une quelconque des revendications 1 à 6, où la couche à indice de réfraction faible (15) est un produit réticulé obtenu en réticulant une composition de résine réticulable par radiation ionisante sous atmosphère d'azote.

8. Film antireflet (10) selon l'une quelconque des revendications 1 à 7, où la couche à indice de réfraction élevé (12) a une dureté au crayon de 2H ou plus.
